## Europäisches Patentamt
## European Patent Office
## Office européen des brevets

(19)

(11) Numéro de publication : **0 027 068**
**B1**

(12)

# FASCICULE DE BREVET EUROPÉEN

(45) Date de publication du fascicule du brevet :
**11.04.84**

(21) Numéro de dépôt : **80401321.7**

(22) Date de dépôt : **16.09.80**

(51) Int. Cl.³ : **F 24 F 11/047**, F 24 F 11/053,
G 05 D 7/01, F 16 L 55/04

(54) **Stabilisateur de débit pour conduit de ventilation.**

(30) Priorité : **05.10.79 FR 7924829**

(43) Date de publication de la demande :
**15.04.81 Bulletin 81/15**

(45) Mention de la délivrance du brevet :
**11.04.84 Bulletin 84/15**

(84) Etats contractants désignés :
**AT BE CH DE GB IT LI LU NL SE**

(56) Documents cités :
**FR-A- 1 109 301
FR-A- 1 229 383
FR-A- 1 256 003
FR-A- 2 086 610
FR-A- 2 091 004
FR-A- 2 136 499
FR-A- 2 411 370
GB-A- 1 181 405
US-A- 3 732 888**

(73) Titulaire : **SOCIETE D'ETUDES ET DE RECHERCHES DE VENTILATION ET D'AERAULIQUE - SERVA**
**Société dite :**
**37, rue des Fougères**
**F-93460 Gournay s/Marne (FR)**

(72) Inventeur : **Jardinier, Pierre**
**15, rue Aristide Briand**
**F-93460 Gournay S/Marne (FR)**
Inventeur : **Simonnot, Jack**
**3, Allée des Chênes Lesigny**
**F-77330 Ozoir la Ferriere (FR)**

(74) Mandataire : **Maureau, Pierre**
**Cabinet GERMAIN, MAUREAU et MILLET 64, rue d'Amsterdam**
**F-75009 Paris (FR)**

## Stabilisateur de débit pour conduit de ventilation

La présente invention concerne un stabilisateur de débit pour conduit de ventilation.

Par le brevet français 2 086 610, on connaît un stabilisateur comprenant une chambre constituée par une vessie déformable, un siège supportant cette chambre avec ménagement d'un orifice permettant à l'air de pénétrer dans la chambre, ou d'en sortir, et des moyens permettant d'adapter ce siège au conduit de ventilation de manière que l'orifice précité soit dirigé vers l'amont, les dimensions respectives de la chambre et de la section du conduit étant telles que sous l'action des différences de pressions existant en amont et en aval, les variations de volume de la chambre qui en résultent modifient la section de passage de l'air dans l'espace ménagé entre la chambre et le conduit.

Par rapport à ceux préalablement connus, ce stabilisateur présente l'avantage de stabiliser le débit d'air sans amplifier les fluctuations brutales et par conséquent sans entretenir un régime d'oscillations dans le conduit.

Suivant une forme d'exécution de ce stabilisateur décrite dans le brevet précité, la chambre constituée par une vessie est réalisée en une matière souple et élastique moulable ou injectable, tel que le caoutchouc ou similaire.

Naturellement, la vessie est moulée en forme, de manière qu'au repos, elle occupe le volume minimal, son élasticité propre assurant son retour à ce volume minimal au fur et à mesure que décroît la différence de pression entre les zones situées en amont et en aval du stabilisateur, dans le conduit.

Cette disposition présente le double inconvénient d'être onéreuse et peu durable en raison de la diminution de l'élasticité de la matière dans laquelle est réalisée la vessie avec son vieillissement.

On connaît aussi par le brevet britannique 1 181 405 un stabilisateur de débit dont l'organe essentiel est constitué par un manchon tubulaire de profil tronconique que le flux à stabiliser traverse dans sa totalité et que des moyens à ressort tendent normalement à maintenir dans une position correspondant à sa plus grande section de passage.

Ce stabilisateur présente toutefois plusieurs inconvénients et notamment de n'assurer aucun effet d'amortissement, de provoquer, à l'entrée, une déviation du flux d'air d'autant plus forte que la pression motrice est plus faible, ce qui justifie le traitement acoustique préconisé pour ses parois et enfin d'exiger des organes de guidage qui, non seulement engendrent des frottements susceptibles de contrarier le fonctionnement de ce stabilisateur, notamment lorsque la pression motrice est faible, mais en outre, peuvent s'accentuer sous l'effet de l'encrassement puisqu'ils sont en contact direct avec le flux d'air stabilisateur.

A cet effet, dans le stabilisateur qu'elle concerne, et qui est du type précité, la vessie est de forme cylindrique et emprisonne des moyens à ressort ayant la forme d'un arc de cercle au moins dans la zone de leur contact avec la paroi de la vessie, les zones de ces contacts étant situées dans un plan diamétral de la vessie et symétriquement par rapport à son axe de révolution, ledit plan passant par l'axe dudit conduit, de sorte que les moyens à ressort assurent le retour de la vessie à son volume minimal lorsque la différence de pression entre les zones du conduit de ventilation situées en amont et en aval d'elle, descend en dessous d'un seuil prédéterminé.

Ainsi, la vessie peut être moulée dans la forme correspondant à son volume maximal, ce qui, par l'absence de contredépouille, facilite son démoulage, et son retour à son volume minimal n'est plus tributaire de son élasticité propre. Sa longévité en est donc considérablement augmentée.

Dans le cas où l'on souhaite que la stabilisation du débit ne soit pas perturbée par les variations de la température, aux moyens à ressort sont associés des moyens thermosensibles compensant les effets des variations de la température par diminution du volume de la chambre lorsque la température augmente et inversement. De préférence, pour assurer une bonne protection mécanique des moyens à ressort lors des manipulations du stabilisateur, lesdits moyens à ressort sont logés entre des plaques parallèles formant carter de protection et éventuellement de guidage.

Suivant une forme d'exécution perfectionnée de l'invention, pour compenser les variations du volume de l'air en fonction des variations de la température et obtenir que la quantité d'air débitée reste constante si seule la température varie, les moyens à ressort placés à l'intérieur de la chambre ont la forme d'au moins un arc de cercle, tel qu'un anneau ouvert et au moins l'une de ses extrémités est fixée à un support thermosensible disposé de telle manière qu'il déplace cette extrémité dans le sens correspondant à une augmentation du rayon de courbure de l'anneau, c'est-à-dire à une diminution du volume de la chambre, si la température augmente et inversement.

Ce support peut être constitué, par exemple, par une bilame.

Avantageusement, chaque extrémité de l'anneau ouvert est fixée à un support thermosensible et ce dernier est constitué par une bilame en forme d'étrier dont la branche centrale est fixée au siège de la chambre.

Suivant une autre caractéristique de l'invention, les moyens pour l'adaptation du siège de la chambre au conduit de ventilation sont constitués par un manchon cylindrique dont le diamètre extérieur correspond à l'alésage dudit conduit dont la paroi extérieure porte une collerette de fixation par bridage ou similaire et dont l'alésage présente une section de passage rectangulaire correspondant aux dimensions de la chambre avec ménagement d'une glissière parallèle à ses génératrices et apte à recevoir le siège de la chambre. Ainsi, lorsque le stabilisateur est encrassé, il suffit de démonter le manchon bridé sur le conduit de ventilation et de retirer la chambre par glissement de son siège le long de la glissière qui lui sert de logement, son remontage après nettoyage se faisant évidemment par les opérations inverses.

Suivant une forme d'exécution pratique de l'invention, la chambre présente une collerette entourant son orifice et son siège est constitué de deux plaques rectangulaires ou carrées assemblées l'une à l'autre de manière amovible et cintrées au profil de l'alésage du manchon destiné à le recevoir, la plaque de plus grand rayon de cintrage ou plaque externe portant, en son centre, les organes de fixation des moyens à ressort tandis que l'autre plaque ou plaque interne présente une ouverture centrale dont le périmètre correspond à celui de la section transversale de la chambre dont la collerette se trouve prise en sandwich entre les deux plaques, l'orifice pour la pénétration de l'air dans la chambre étant formé par les rainures ménagées depuis la zone centrale de la face interne de la plaque externe jusqu'à son bord correspondant à la zone amont du conduit de ventilation.

Suivant encore une autre caractéristique avantageuse de l'invention, la vessie constituant la chambre est réalisée en élastomère aux silicones dont le coefficient de frottement par rapport aux moyens à ressort logés à l'intérieur est très faible, et qui présente en outre, l'avantage de résister aux températures élevées.

De toute façon, l'invention sera bien comprise à l'aide de la description qui suit en référence au dessin schématique annexé, représentant, à titre d'exemple non limitatif, plusieurs formes d'exécution de ce stabilisateur.

Figures 1 et 2 sont des vues en coupe suivant respectivement 1-1 de figure 2 et 2-2 de figure 1 montrant la forme d'exécution la plus simple de ce stabilisateur ;

Figures 3 et 4 sont des vues similaires aux figures 1 et 2, illustrant une autre forme d'exécution de ce stabilisateur, suivant laquelle il est tenu compte des variations de températures ;

Figures 5 et 6 sont des vues similaires aux figures 3 et 4 illustrant le fonctionnement du stabilisateur représenté sur les figures 3 et 4 ;

Figures 7 et 8 sont des vues similaires aux figures 3 et 4 illustrant une variante d'exécution de ce stabilisateur ;

Figure 9 est une vue en bout montrant une forme de réalisation du stabilisateur des figures 7 et 8 ;

Figure 10 est une vue en coupe suivant 10-10, de figure 9.

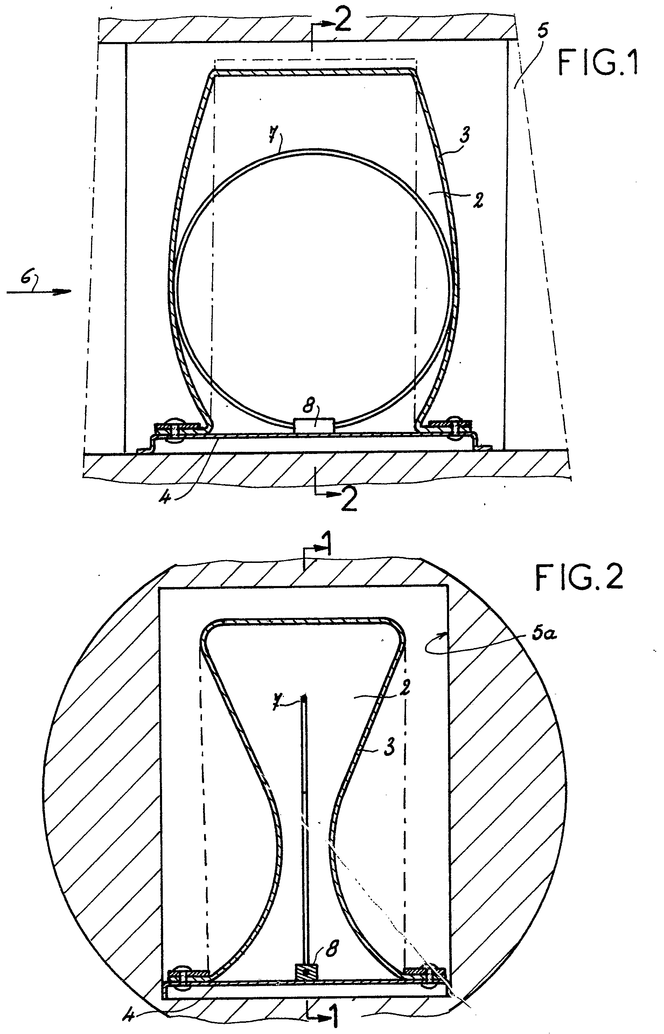

Le stabilisateur selon l'invention est, comme indiqué précédemment, du type décrit et revendiqué dans le brevet français 2 086 610 c'est-à-dire comportant une chambre 2 constituée par une vessie 3 en matière déformable, un siège 4 supportant la vessie 3 avec ménagement d'un orifice non visible sur les figures 1 à 8 mais permettant à l'air de pénétrer dans la chambre 2 et d'en sortir, et des moyens non représentés sur les figures 1 à 8 permettant de fixer le siège 4 au conduit de ventilation 5 dont le débit doit être régulé.

A l'emplacement de la vessie 3, le conduit de ventilation 5 présente une section de passage d'air rectangulaire 5a, visible sur le dessin et notamment sur les figures 2, 4, 6 et 9. Cette section est adaptée à la forme de la chambre 2, c'est-à-dire de la vessie 3.

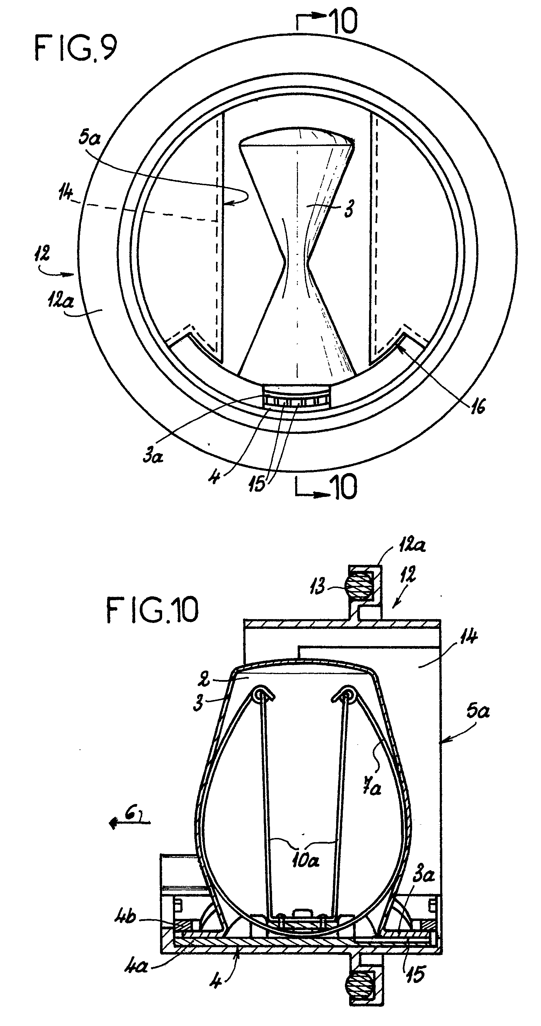

Comme indiqué dans le brevet précité, l'orifice permettant à la chambre 2 de communiquer avec l'extérieur est orienté vers la zone amont du conduit 5, c'est-à-dire du côté gauche sur les figures 1, 3 et 5 à 8, le sens d'écoulement de l'air dans ce conduit 5 étant illustré par les flèches 6. Sur la figure 10, cet orifice et par conséquent la flèche 6 correspondante, sont orientés dans les directions inverses.

Comme cela était déjà le cas dans le dispositif décrit dans ce brevet, en l'absence de différences de pression entre les zones amont et aval du conduit 5, lorsque règne une très faible différence de pression, la vessie 3 est au repos et la chambre 2 occupe un volume minimal tel que visible sur la figure 2, de manière à présenter une section de passage d'air importante au droit de la section 5a du conduit 5.

Lorsque la différence de pression précitée dépasse un certain seuil, il en résulte un gonflement de la vessie 3 et, par conséquent, une augmentation du volume de la chambre 2 ce qui aboutit à une diminution de la section de passage de l'air entre la vessie 3 et la section 5a du conduit 5.

Selon la présente invention, le retour de la vessie 3 à sa position repos, dans laquelle elle occupe un volume minimal, est obtenu non pas par l'élasticité propre de sa paroi, mais par des moyens à ressorts logés à l'intérieur de la chambre 2. La présence de ces moyens à ressorts élimine les inconvénients du vieillissement de la matière constitutive de la vessie 3 puisque le fonctionnement de ce stabilisateur n'est plus tributaire de l'élasticité propre de cette matière. En outre, leur disposition à l'intérieur de la chambre 2 dont l'air n'est pratiquement pas renouvelé les protège contre les poussières et autres agents corrosifs.

Un autre avantage résultant de cette disposition, réside dans le fait que la vessie 3 peut être moulée en une forme simple et notamment dans la forme cylindrique représentée en traits mixtes sur la figure 1, ce qui facilite son démoulage. Ceci réduit considérablement le prix de revient de la vessie 3.

Cette vessie peut, par exemple, être réalisée en élastomère et, de préférence, en un élastomère aux silicones qui présente, non seulement l'avantage d'une très grande souplesse mais en outre, celui de présenter un très faible coefficient de frottement par rapport aux moyens à ressort logés dans la chambre. Cette matière présente aussi l'avantage de bien résister aux températures élevées.

Dans l'exemple illustré sur les figures 1 et 2, les moyens à ressorts logés à l'intérieur de la chambre 2 pour maintenir la vessie 3 dans la position correspondant au volume minimum de la chambre 2, sont constitués tout simplement par un anneau 7 en acier à ressort, fixé par un des points de sa circonférence et à l'aide de tout moyen approprié 8 au siège 4 du stabilisateur.

Cet anneau 7 a un diamètre sensiblement égal à la moitié du périmètre de la vessie 3, de telle sorte que lorsque cette dernière n'est soumise à aucune pression différentielle, elle occupe la position aplatie visible sur la figure 2.

On conçoit aisément que lorsque la différence de pression entre les zones amont et aval du conduit 5 dépasse un certain seuil, il en résultera une pénétration d'air à l'intérieur de la chambre 2 tendant à gonfler la vessie 3 et à augmenter par conséquent le volume de la chambre 2, ce qui aura pour effet, en diminuant la section de passage de l'air entre la vessie 3 et la section 5a du conduit 5, de freiner le débit d'air et, par conséquent, d'obtenir la stabilisation désirée.

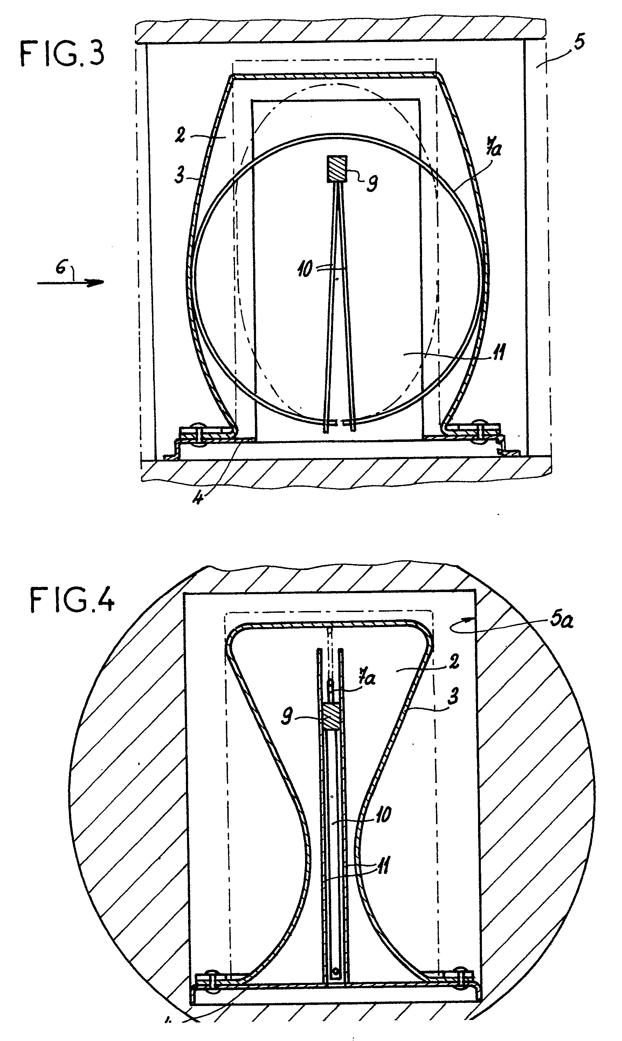

Les figures 3 à 6 illustrent une variante de réalisation de ce stabilisateur, variante selon laquelle les moyens à ressorts logés à l'intérieur de la chambre 2 sont agencés pour tenir compte des variations de la température.

En effet, lorsqu'une pression différentielle constante la température augmente, la quantité d'air débitée diminue puisque le volume de l'air augmente. Il est donc souhaitable que la section de passage de l'air entre la vessie 3 et la section 5a du conduit 5 soit augmentée si l'on veut que le débit massique d'air reste constant.

Dans l'exemple illustré sur les figures 3 à 6, ce résultat est obtenu par le fait que les moyens à ressorts sont constitués par un anneau ouvert 7a en acier à ressorts dont chaque extrémité est liée à l'extrémité libre d'une bilame 10 ; les deux bilames 10 sont liées, par leur autre extrémité, à une entretoise 9 supportée par deux plaques 11 fixées perpendiculairement au siège 4 du stabilisateur. Ces plaques 11 jouent également le rôle de carter de protection de l'anneau ouvert 7a et des bilames 10 lors des manipulations du stabilisateur. Ces plaques 11 assurent aussi le guidage de l'anneau ouvert 7a.

Les figures 3 et 4 illustrent la position des bilames 10 lorsque la température est inférieure à un seuil prédéterminé, par exemple 20°. Dans cette position, les deux extrémités de l'anneau 7a sont en appui l'une contre l'autre et le stabilisateur fonctionne comme dans l'exemple illustré sur les figures 1 et 2.

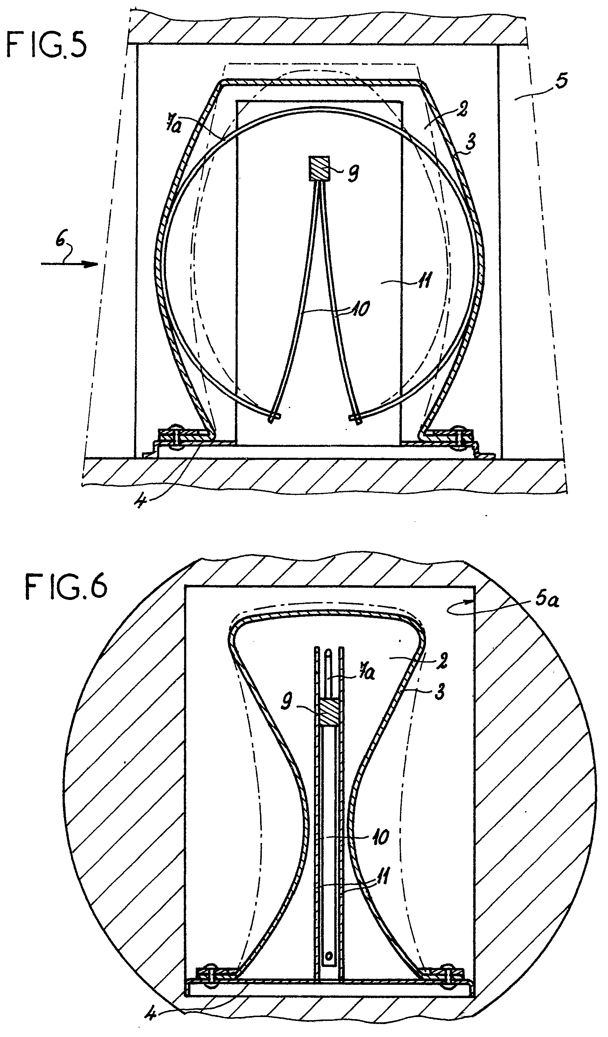

Lorsque la température croît au delà du seuil précité, les deux bilames 10 tendent à s'écarter l'une de l'autre, comme illustré sur la figure 5, écartant de ce fait les extrémités de l'anneau 7a.

Pour une pression différentielle déterminée, les contraintes exercées sur la vessie 3 augmentent avec la température. La section de passage d'air entre la vessie 3 et la section 5a du conduit 5, augmente donc et, par conséquent, la quantité d'air débitée dont le volume a augmenté, reste constante. Le « débit masse » est par conséquent constant.

Les figures 5 et 6 montrent, en traits pleins, la position occupée par la vessie 3 lorsque la température est au-dessus du seuil précité, et que la pression différentielle est nulle. Sur ces mêmes figures est représentée, en traits mixtes, la position occupée par l'anneau 7a et la vessie 3 lorsqu'il existe une pression différentielle et que la température est toujours à une valeur située au-dessus du seuil précité.

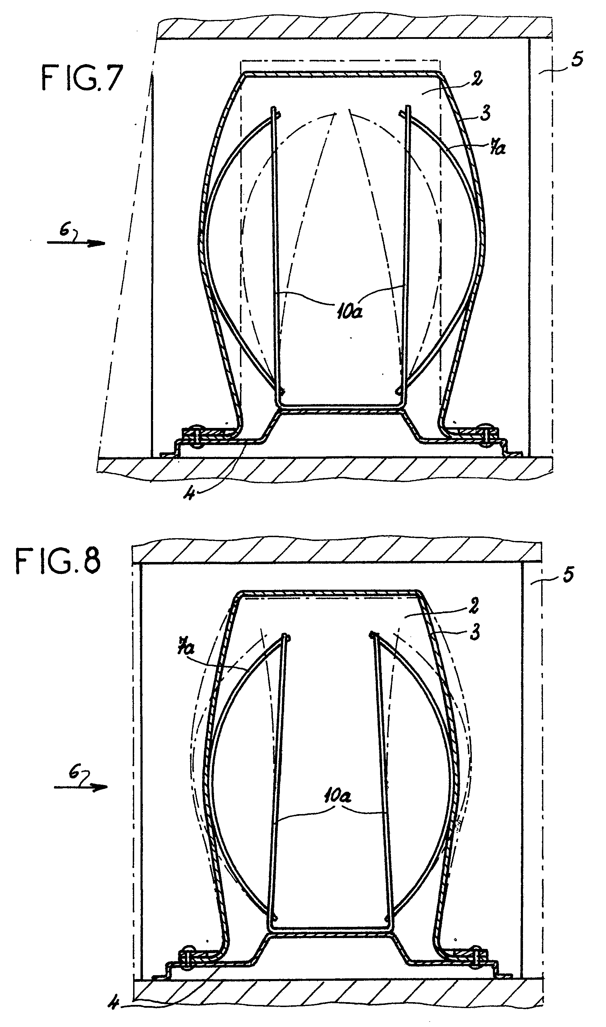

Les figures 7 et 8 illustrent une variante de réalisation du stabilisateur illustré par les figures 3 à 6.

Dans cette variante, les bilames 10a, à chacune desquelles est accrochée l'une des extrémités de l'anneau ouvert 7a, sont constituées par les branches latérales d'une pièce en forme d'étrier, elle-même fixée par sa branche centrale au siège 4 du stabilisateur.

Sur la figure 7, on a représenté, respectivement en traits pleins et en traits mixtes, les positions extrêmes de la vessie 3, de l'anneau 7a et des bilames 10a à une température constante inférieure au seuil prédéterminé, positions résultant de l'absence ou de l'existence d'une pression différentielle.

Sur la figure 8, on a représenté, en traits mixtes et en traits pleins, les positions extrêmes de la vessie 3, de l'anneau ouvert 7a, et des bilames 10a correspondant respectivement pour une pression différentielle déterminée, à une température inférieure au seuil prédéterminé et à une température supérieure au seuil prédéterminé.

Les figures 9 et 10 illustrent en détail une forme d'exécution du stabilisateur des figures 7 et 8.

Dans cette forme d'exécution, les moyens permettant l'adaptation du siège 4 de la chambre au conduit de ventilation 5, sont constitués par un manchon cylindrique 12 dont le diamètre extérieur correspond à l'alésage du conduit 5 et dont la paroi extérieure porte une collerette 12a éventuellement pourvue d'un joint d'étanchéité 13 permettant sa fixation par bridage ou similaire, entre deux éléments coaxiaux du conduit 5.

Comme le montre notamment la figure 9, ce manchon 12 présente un cloisonnement intérieur 14 délimitant la section 5a sensiblement rectangulaire du conduit 5 à l'intérieur de laquelle doit être placée la vessie 3.

Dans l'exemple illustré sur ces figures 9 et 10, le siège 4 de la vessie 3 est constitué de deux plaques rectangulaires ou carrées 4a et 4b, assemblées l'une à l'autre de manière amovible par exemple par clippage au moyen de crochets solidaires de l'une et engageables dans des découpes prévues dans l'autre, ces deux plaques étant cintrées au profil de l'alésage du manchon 12.

La plaque extérieure 4a, c'est-à-dire celle présentant le plus grand rayon de courbure, présente sur sa face inférieure des rainures 15 s'étendant depuis son bord tourné vers la zone amont du conduit 5 jusqu'à proximité de son centre tandis que la plaque intérieure 4b, c'est-à-dire celle présentant le plus petit rayon de courbure, comporte en son centre une ouverture circulaire au diamètre de la vessie 3.

Enfin, comme le montre, notamment la figure 10, la vessie 3 présente une collerette 3a entourant son orifice et qui est destinée à être prise en sandwich entre les deux plaques 4a et 4b du siège 4, ce qui assure la fermeture étanche de la chambre 2, les rainures précitées 15 constituant l'orifice qui permet à l'intérieur de la chambre 2 de communiquer avec l'extérieur.

Enfin, comme le montrent les figures 9 et 10, le cloisonnement 14 du manchon 12 est réalisé avec ménagement d'un décrochement 16 constituant une glissière en forme de secteur de cylindre, apte à recevoir, par coulissement, le siège 4 de la chambre 2.

Cette disposition facilite la mise en place et le retrait du siège 4 et, par conséquent, de la vessie 3 et des moyens à ressorts qui lui sont associés, notamment en vue de son nettoyage.

Dans la forme d'exécution illustré sur les figures 9 et 10, le manchon 12 est réalisé par moulage en alliage léger ou en matière plastique, mais il pourrait être réalisé de toute autre manière appropriée et, notamment, par métallo-soudure.

## Revendications

1. Stabilisateur de débit pour conduit de ventilation, du type comprenant une chambre (2) constituée par une vessie déformable (3), un siège (4) supportant cette chambre avec ménagement d'un orifice permettant à l'air de pénétrer dans la chambre ou d'en sortir, et des moyens permettant d'adapter ce siège au conduit de ventilation (5), de manière que l'orifice précité soit dirigé vers l'amont, les dimensions respectives de la chambre (2) et de la section du conduit (5) étant telles que sous l'action des différences de pressions existant en amont et en aval, les variations de volume de la chambre (2) qui en résultent modifient la section de passage de l'air dans l'espace ménagé entre la chambre (2) et le conduit (5), caractérisé en ce que la vessie (3) est de forme cylindrique et emprisonne des moyens à ressort (7, 7a) ayant la forme d'un arc de cercle au moins dans la zone de leur contact avec la paroi de la vessie (3), les zones de ces contacts étant situées dans un plan diamétral de la vessie (3) et symétriquement par rapport à son axe de révolution, ledit plan passant par l'axe dudit conduit (5), de sorte que les moyens à ressort (7, 7a) assurent le retour de la vessie (3) à son volume minimal lorsque la différence de pression entre les zones du conduit de ventilation (5) situées en amont et en aval d'elle, descend en-dessous d'un seuil prédéterminé.

2. Stabilisateur selon la revendication 1, caractérisé en ce qu'aux moyens à ressort (7a) sont associés des moyens thermosensibles (10) compensant les effets des variations de la température par diminution du volume de la chambre (2) lorsque la température augmente et inversement.

3. Stabilisateur selon la revendication 1 ou la revendication 2, caractérisé en ce que les moyens à ressort (7, 7a) sont logés entre des plaques parallèles (11) formant carter de protection et éventuellement de guidage.

4. Stabilisateur selon l'une quelconque des revendications 1 à 3, caractérisé en ce que les moyens à ressort (7a) placés à l'intérieur de la chambre (2) ont la forme d'un arc de cercle, tel qu'un anneau ouvert (7a) et au moins l'une de ses extrémités est fixée à un support thermosensible (10, 10a) disposé de telle manière qu'il déplace cette extrémité dans le sens correspondant à une augmentation du rayon de courbure de l'anneau (7a), c'est-à-dire à une diminution du volume de la chambre, si la température augmente et inversement.

5. Stabilisateur selon la revendication 4, caractérisé en ce que le support de l'extrémité considérée de l'anneau ouvert (7a) en acier à ressort est constitué par une bilame (10a).

6. Stabilisateur selon la revendication 4, caractérisé en ce que chaque extrémité de l'anneau ouvert (7a) est fixée à un support thermosensible et ce dernier est constitué par une bilame (10a) en forme d'étrier dont la branche centrale est fixée au siège (4) de la chambre (2).

7. Stabilisateur selon l'une quelconque des revendications précédentes, caractérisé en ce que les moyens pour l'adaptation du siège (4) de la chambre (2) au conduit de ventilation (5) sont constitués par un manchon cylindrique (12) dont le diamètre extérieur correspond à l'alésage dudit conduit (5), dont la paroi extérieure porte une collerette (12a) de fixation par bridage ou similaire et dont l'alésage présente une section de passage rectangulaire correspondant aux dimensions de la chambre (2) avec ménagement d'une glissière (16) parallèle à ses génératrices et apte à recevoir le siège (4) de la chambre (2).

8. Stabilisateur selon la revendication 7, caractérisé en ce que la chambre (2) présente une collerette (3a) entourant son orifice et son siège (4) est constitué de deux plaques rectangulaires ou carrées (4a, 4b) assemblées l'une à l'autre de manière amovible et cintrées au profil de l'alésage du manchon (12) destiné à le recevoir, la plaque (4a) de plus grand rayon de cintrage ou plaque externe portant, en son centre, les organes de fixation des moyens à ressort (7, 7a) tandis que l'autre plaque (4b) ou plaque interne présente une ouverture centrale dont le périmètre correspond à celui de la section transversale de la chambre (2) dont la collerette (3a) se trouve prise en sandwich entre les deux plaques (4a, 4b), l'orifice pour la pénétration de l'air dans la chambre (2) étant formé par des rainures (15) ménagées depuis la zone centrale de la face interne de la plaque externe (4a) jusqu'à son bord correspondant à la zone amont du conduit de ventilation (5).

9. Stabilisateur selon l'une quelconque des revendications précédentes, caractérisé en ce que la vessie (3) constituant la chambre (2) est réalisée en élastomère aux silicones.

## Claims

1. An output stabiliser for a ventilation duct of the type comprising a chamber (2) constituted by a deformable bladder (3), a seat (4) supporting this chamber with the provision of an orifice allowing the air to pass into the chamber or to leave it, and means allowing this seat to be adapted to the ventilating duct (5) so that the above mentioned opening should be directed towards the intake, the respective dimensions of chamber (2) and of the cross section of duct (5) being such that under the effect of the differences in pressure existing ahead and downline, the variations in volume of chamber (2) resulting therefrom modify the cross-section of the passage for the air within the space arranged between chamber (2) and duct (5), characterised in that bladder (3) is of a cylindrical shape and holds elastic means (7a) having the shape of a circular arc, at least in the zone of their contact with the wall of bladder (3), the zones of these contacts being situated in a diametral plane of bladder (3) and symmetrically with respect to its axis of revolution, the said plane passing through the axis of the said duct (5) so that the elastic means (7a) ensure the return of bladder (3) to its minimal volume when the pressure difference between the zones of the ventilating duct (5) situated ahead and downline therefrom, falls below a predetermined threshold.

2. A stabiliser according to Claim 1, characterised in that with the elastic means (7a), there are associated heat sensitive means (10) compensating the effects of the temperature variations by a decrease in the volume of chamber (2) when the temperature increases and vice versa.

3. A stabiliser according to Claim 1 or Claim 2, characterised in that the elastic means (7a) are accommodated between parallel plates (11) forming a casing for protection and possibly for guidance.

4. A stabiliser according to anyone of Claims 1 to 3, characterised in that the elastic means (7a) placed within chamber (2) have the form of a circular arc such as an open ring (7a) and at least one of its ends is fixed to a heat sensitive mounting (10a) disposed in such a way that it displaces this end in the direction corresponding to an increase in the radius of curvature of ring (7a), that is to say, to a decrease in volume of the chamber if the temperature increases and vice versa.

5. A stabiliser according to Claim 4, characterised in that the mounting for the end in question of the open ring (7a) of spring steel is constituted by a bimetallic strip (10a).

6. A stabiliser according to Claim 4, characterised in that each end of the open ring (7a) is fixed to a heat sensitive mounting and this latter is constituted by a stirrup shaped bimetallic strip (10a) whose central section is fixed to the seat (4) of chamber (2).

7. A stabiliser according to any one of the preceding Claims, characterised in that the means for adapting seat (4) of chamber (2) to the ventilation duct (5) are constituted by a cylindrical sleeve (12) whose outer diameter corresponds to the bore of the said duct (5) whose external wall carries a flange (12a) for fixing by clamping or similar means and whose bore has a rectangular passage cross-section corresponding to the dimensions of chamber (2) with the arrangement of a groove (16) parallel to its generatrices and capable of accommodating seat (4) of chamber (2).

8. A stabiliser according to Claim (7), characterised in that chamber (2) has a flange (3a) surrounding its opening and its seat (4) is constituted by two rectangular or square plates (4a, 4b) joined to each other in a detachable manner and bent to the profile of the bore os sleeve (12) intended to accommodate it, plate (4a) with the greater bending diameter or the external plate carrying at its centre the fixing devices for the elastic means (7a) whilst the other plate (4b) or internal plate has a central opening whose perimeter corresponds to the transverse cross-section of chamber (2) whose flange (3a) is sandwiched between the two plates (4a, 4b), the opening for the penetration of the air into chamber (2) being formed by channels (15) arranged from the central zone of the internal surface of the external plate (4a) as far as its edge corresponding to the intake zone of the ventilation duct (5).

9. A stabiliser according to any one of the preceding Claims, characterised in that the bladder (3) constituting chamber (2) is made of a silicone elastomer.

## Ansprüche

1. Luftmengenstabilisator für eine Belüftungsleitung des Typs, der eine durch eine verformbare Blase (3) gebildete Kammer (2), einen diese Kammer tragenden Sitz (4) mit einer entsprechenden Öffnung, die es ermöglicht, daß Luft in die Kammer eindringt oder aus dieser heraustritt, und Mittel, die es ermöglichen, den genannten Sitz an die Belüftungsleitung (5) in der Weise anzupassen, daß die vorgenannte Öffnung nach oben gerichtet ist, aufweist, wobei die jeweiligen Abmessungen der Kammer (2) und des Querschnitts der Leitung (5) so gewählt werden, daß unter der Wirkung von oberhalb und unterhalb existierenden Druckunterschieden, die daraus resultierenden Veränderungen des Kammervolumens den Querschnitt des Luftdurchtritts in dem zwischen der Kammer (2) und der Leitung (5) geschaffenen Raum verändern, dadurch gekennzeichnet, daß die Blase (3) in der Form zylindrisch ist und Federmechanismen (7a), die zumindest in dem Bereich ihres Kontaktes mit der Wand der Blase (3) die Form eines Kreisbogens haben, umschließt, wobei die Bereiche der genannten Kontakte in einer diametralen Linie der Blase (3) und bezüglich ihrer Drehachse symmetrisch liegen, und wobei die genannte Ebene sich in der Weise durch die Achse der genannten Leitung (5) erstreckt, daß die Federmechanismen (7a) die Rückkehr der Blase (3) zu ihrem Minimalvolumen sicherstellt, wenn die Druckdifferenz zwischen den oberhalb und unterhalb von ihr liegenden Bereichen der Belüftungsleitung (5) unterhalb eines vorherbestimmten Schwellenwertes absinkt.

2. Stabilisator nach Anspruch 1, dadurch gekennzeichnet, daß mit den Federmechanismen (7a) wärmeempfindliche Mittel (10) verbunden sind, die die Wirkungen der Temperaturschwankungen durch Verringerung des Volumens der Kammer (2) ausgleichen, wenn die Temperatur steigt und umgekehrt.

3. Stabilisator nach Anspruch 1 oder 2, dadurch gekennzeichnet, daß die Federmechanismen (7a) zwischen den parallelen Platten (11) liegen, die das Schutz- und eventuell Führungsgehäuse bilden.

4. Stabilisator nach Ansprüchen 1 bis 3, dadurch gekennzeichnet, daß die Federmechanismen (7a) im Inneren der Kammer (2) die Form eines Kreisbogens, wie z. B. eines offenen Ringes (7a) haben und dadurch, daß mindestens eines ihrer Enden an einem wärmeempfindlichen Träger (10a) befestigt ist, der so angeordnet ist, daß er das genannte Ende in der einer Erhöhung des Krümmungsradius des Ringes (7a), d. h. einer Verringerung des Volumens der Kammer entsprechenden Richtung verschiebt, wenn die Temperatur steigt bzw. umgekehrt.

5. Stabilisator nach Anspruch 4, dadurch gekennzeichnet, daß der Träger des erwähnten Endes des offenden Federstahlringes (7a) aus einem Bimetall (10a) besteht.

6. Stabilisator nach Anspruch 4, dadurch gekennzeichnet, daß jedes Ende des offenen Ringes (7a) an einem temperaturempfindlichen Träger befestigt ist und daß letzterer aus einem Bimetall (10a) in Bügelform besteht, dessen zentraler Ast am Sitz (4) der Kammer (2) befestigt ist.

7. Stabilisator nach Ansprüchen 1 bis 6, dadurch gekennzeichnet, daß die Mittel zur Anpassung des Sitzes (4) der Kammer (2) an die Belüftungsleitung (5) aus einer zylindrischen Muffe (12) bestehen, deren Außendurchmesser der Bohrung der Leitung (5) entspricht, deren Außenwand zur Befestigung durch Schellen oder ähnliches einen Bund (12a) aufweist, und dessen Bohrung eine den Abmessungen der Kammer (2) entsprechende rechtwinkelige Durchtrittsöffnung aufweist, wobei eine zu ihren Mantellinien parallele, zur Aufnahme des Sitzes (4) der Kammer (2) geeignete Gleitschiene (16) vorgesehen ist.

8. Stabilisator nach Anspruch 7, dadurch gekennzeichnet, daß die Kammer (2) einen Bund (3a) aufweist, der ihre Öffnung umschließt, und daß sein Sitz (4) durch zwei rechteckige oder quadratische, in trennbarer Weise miteinander verbundene und entsprechend dem Profil der Bohrung der zu seiner Aufnahme bestimmten Muffe (12) gebogene Platten (4a, 4b) gebildet wird, wobei die Platte (4a) mit dem grösseren Krümmungsradius bzw. Außenplatte an ihrem Mittelpunkt die Befestigungsorgane für die Federmechanismen (7a) trägt, während die andere Platte (4b) bzw. Innenplatte eine zentrale Öffnung aufweist, deren Umfang demjenigen des Querschnittes der Kammer (2) entspricht, deren Bund (3a) sandwichartig zwischen den beiden Platten (4a, 4b) eingeklemmt wird, wobei die Öffnung für das Eindringen der Luft in die Kammer (2) durch Rillen (15) gebildet wird, die ausgehend von dem Zentralbereich der Innenseite der Außenplatte (4a) bis zu ihrer der stromaufwärts liegenden Zone der Belüftungsleitung (5) entsprechenden Kante angeordnet sind.

9. Stabilisator nach Ansprüchen 1 bis 8, dadurch gekennzeichnet, daß die die Kammer (2) bildende Blase (3) aus Silikonelastomer hergestellt wird.

FIG.1

FIG.2

0 027 068

FIG.3

FIG.4

FIG.5

FIG.6

FIG.7

FIG.8

FIG.9

FIG.10